**Europäisches Patentamt**

**European Patent Office**

**Office européen des brevets**

(19)

(11) Veröffentlichungsnummer: **0 030 042**
**B1**

# (12) EUROPÄISCHE PATENTSCHRIFT

(45) Veröffentlichungstag der Patentschrift:
18.05.83

(21) Anmeldenummer: 80200930.8

(22) Anmeldetag: 02.10.80

(51) Int. Cl.³: **B 23 P 15/10** // C22F3/00

(54) **Verfahren zur Gestaltung des Randes einer Brennraummulde eines Leichtmetallkolbens.**

(30) Priorität: 29.11.79 DE 2948057

(43) Veröffentlichungstag der Anmeldung:
10.06.81 Patentblatt 81/23

(45) Bekanntmachung des Hinweises auf die Patenterteilung:
18.05.83 Patentblatt 83/20

(84) Benannte Vertragsstaaten:
AT DE FR GB IT SE

(56) Entgegenhaltungen:
DE-A-2 612 833
GB-A-1 373 987

(73) Patentinhaber: KARL SCHMIDT GMBH,
Christian-Schmidt-Strasse 8/12 Postfach 1351,
D-7107 Neckarsulm (DE)

(72) Erfinder: Zammert, Wolf Udo, Dr.Ing., Leipziger
Strasse 109, D-7107 Neckarsulm (DE)

(74) Vertreter: Fischer, Ernst, Dr., Reuterweg 14,
D-6000 Frankfurt am Main 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Verfahren zur Gestaltung des Randes einer Brennraummulde eines Leichtmetallkolbens

Die Erfindung betrifft ein Verfahren zur Gestaltung durch Umschmelzen des Randes einer im Kolbenboden eines fertigbearbeiteten Leichtmetallkolbens angeordneten Brennraummulde mittels eines oszillierenden Ladungsträgerstrahls.

Bei Leichtmetallkolben mit im Kolbenboden liegender Brennraummulde können bei Überschreitung des Beanspruchungsmaximums des Kolbenwerkstoffs senkrecht zum Brennraummuldenrand thermisch bedingte Risse auftreten.

Gegen solche Risse können eine ganze Reihe von Massnahmen vorgesehen werden. So ist es bekannt, den Bereich des Brennraummuldenrandes mit Einsatzelementen aus hitzebeständigem Stahl oder aus metallkeramischen Werkstoffen zu versehen. Durch diese Massnahmen wird jedoch in nachteiliger Weise das Gewicht des Kolbens nicht unbedeutend erhöht. Ferner können wegen der vergleichsweise schlechten Wärmeleitfähigkeit und unterschiedlichen Ausdehnungskoeffizienten der Werkstoff der Einsatzelemente Hitzeschäden am umgebenen Leichtmetall auftreten. Die gleichen Nachteile weisen auch Einsatzelemente aus Werkstoffen hoher Duktilität auf, welche durch Elektronenstrahlschweissen oder Reibschweissen im Bereich des Muldenrandes angeordnet sind. Weit bessere Ergebnisse werden durch Teileloxieren des Kolbenbodens und des Brennraummuldenrandbereichs erzielt (DE-B-25 07 899).

In der GB-A-1 373 987 ist ferner ein Verfahren der eingangs genannten Art vorgesehen, bei dem ein Kolbenrohling mit einer im Bereich des Brennraummuldenrandes vorgesehenen Bearbeitungszugabe hergestellt und dann eine ausserhalb der Bearbeitungszugabe liegende Zone im Bereich des späteren Brennraummuldenrandes durch Umschmelzen mittels eines Ladungsträgerstrahls veredelt wird, indem zwei oder drei untereinander und zum Rand der Brennraummulde parallel verlaufende, sich teilweise überdeckende Umschmelznähte mittels eines quer zu deren Verlauf bzw. kreisförmig oder elliptisch schwingenden Ladungsträgerstrahls erzeugt werden. Danach wird die Umschmelzzone durch Entfernen der Bearbeitungszugabe freigelegt. Durch das Umschmelzen mittels eines Ladungsträgerstrahls wird nur eine relativ kleine, unmittelbar im Strahlbereich liegende Werkstoffmenge aufgeschmolzen, die sofort nach Entfernen des Ladungsträgerstrahls wieder erstarrt, wodurch es zur Ausbildung eines feinkörnigen Gefüges mit relativ hoher Festigkeit und grosser Dehnung kommt.

Nun ist aus «Motortechnische Zeitschrift» 40 (1979), Seiten 261 bis 266, 264 bekannt, dass mit solchen Kolben, deren Brennraummuldenrand mit Hilfe eines Ladungsträgerstrahls umgeschmolzen worden war, teilweise gute Ergebnisse, teilweise auch gar keine Verbesserung erzielt wurde, d.h. die Gefahr der Ausbildung von Rissen am Brennraummuldenrand kann mit letzter Sicherheit nicht vermieden werden.

Es ist daher die Aufgabe der vorliegenden Erfindung, bei Leichtmetallkolben der eingangs beschriebenen Gestalt thermisch bedingte Risse im Bereich des Brennraummuldenrandes mit Sicherheit zu unterbinden.

Erfindungsgemäss geschieht das in der Weise, dass der fertigbearbeitete Kolben unter einem Winkel von 40 bis 50°, vorzugsweise 45°, geneigt zum oszillierenden Ladungsträgerstrahl geführt wird, der den durch Umschmelzen zu veredelnden Bereich des Brennraummuldenrandes überdeckt und nur einmal überstreicht.

Als besondere Massnahme sind zusätzlich Umschmelzgeschwindigkeit und Frequenz so zu wählen, dass die Umschmelzgeschwindigkeit 20 bis 50 mm/s, vorzugsweise 25 bis 36 mm/s und die Frequenz 500 bis 900 Hz, vorzugsweise 750 Hz, betragen.

Die Tiefe der Umschmelzung sollte wenigstens 1 mm, nicht aber mehr als 3 mm betragen.

Von besonderem Vorteil ist die Anwendung des erfindungsgemässen Verfahrens auf Leichtmetallkolben für Dieselbrennkraftmaschinen mit Brennraummulde mit einem mit einer Harteloxalschicht überzogenen Kolbenboden, wobei die Harteloxalschicht in den in Bolzenrichtung liegenden Bereichen des Brennraummuldenrandes ausgespart ist.

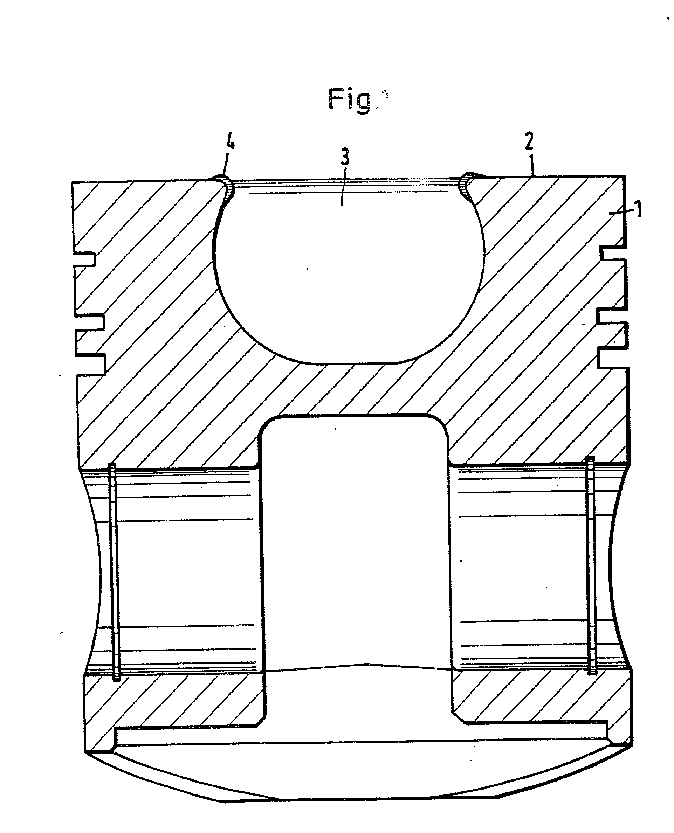

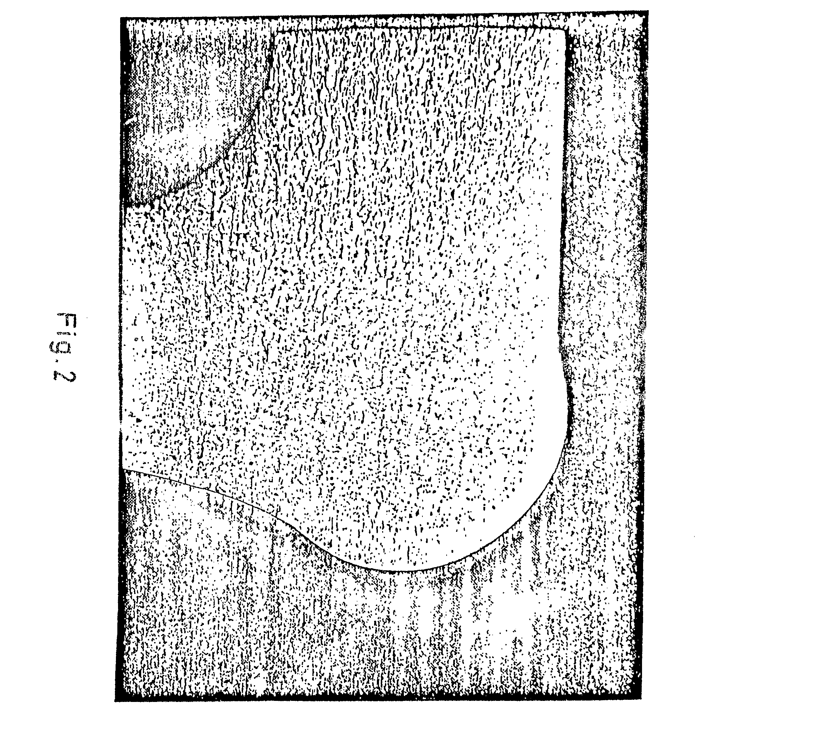

Die Erfindung ist in der Zeichnung beispielhaft dargestellt und im folgenden näher erläutert (Fig. 1 und 2):

Der fertigbearbeitete Leichtmetallkolben 1 mit einer im Kolbenboden 2 befindlichen kugelförmigen Brennraummulde 3 ist im Bereich des Brennraummuldenrandes mittels eines Elektronenstrahls auf eine Tiefe von 2 mm oberflächlich veredelt worden. Der Kolben war unter einem Winkel von 45° zum Elektronenstrahl geneigt, die Umschmelzgeschwindigkeit betrug 30 mm/s und die Frequenz 750 Hz. Das in der Zeichnung beigefügte Schliffbild aus dem Bereich des Brennraummuldenrandes zeigt sehr deutlich, dass durch das Umschmelzen im Bereich des Brennraummuldenrandes ein – vergleichen mit dem Gussgefüge des übrigen Kolbens – sehr feines Gefüge erzielt worden ist.

Die mit dem erfindungsgemässen Verfahren erzielten Vorteile bestehen darin, dass durch die durch das Umschmelzen des Brennraummuldenrandes erzielte Steigerung der Temperatur-Wechselbeständigkeit die Ausbildung von Muldenrandrissen völlig vermieden wird.

## Patentansprüche

1. Verfahren zum Umschmelzen des Randes (4) einer im Boden (2) eines Leichtmetallkolbens (1) befindlichen Brennraummulde (3) mittels eines oszillierenden Ladungsträgerstrahls, dadurch gekennzeichnet, dass am fertigbearbeiteten Kolben (1) der Ladungsträgerstrahl den umzuschmelzenden Bereich des Randes (4) der Brennraummulde überdeckt und unter einem Winkel von 40 – 50° zum Kolben geneigt einmal überstreicht.

2. Verfahren nach Anspruch 1, dadurch gekennzeichnet, dass die Umschmelzgeschwindigkeit 20 bis 50 mm/s, vorzugsweise 25 bis 35 mm/s und die Frequenz 500 bis 900 Hz, vorzugsweise 750 Hz, betragen.

3. Verfahren nach den Ansprüchen 1 und 2, dadurch gekennzeichnet, dass die Eindringtiefe des Ladungsträgerstrahls 1 bis 3 mm beträgt.

4. Anwendung des Verfahrens für einen Leichtmetallkolben für Dieselbrennkraftmaschinen mit Brennraummulde mit einem mit einer Harteloxalschicht überzogenen Kolbenboden, wobei die Harteloxalschicht in den in Bolzenrichtung liegenden Bereichen ausgespart ist.

## Revendications

1. Procédé de refusion du bord (4) d'une cavité formant chambre de combustion (3) se trouvant dans le fond (2) d'un piston (1) en métal léger, au moyen d'un faisceau oscillant de porteurs de charge, caractérisé en ce que, sur le piston (1) fini, le faisceau de porteurs de charge s'étend au-dessus de la région à refondre du bord (4) de la cavité formant chambre de combustion et la balaye une seule fois en étant incliné sous un angle de 40 à 50° par rapport au piston.

2. Procédé suivant la revendication 1, caractérisé en ce que la vitesse de refusion est comprise entre 20 et 50 mm/s et, de préférence, entre 25 et 35 mm/s, et la fréquence entre 500 et 900 Hz et, de préférence, est de 750 Hz.

3. Procédé suivant les revendications 1 et 2, caractérisé en ce que la profondeur de pénétration du faisceau de porteurs de charge est comprise entre 1 et 3 mm.

4. Utilisation du procédé pour un piston en métal léger de moteur à combustion interne diésel à cavité formant chambre de combustion, ayant un fond de piston revêtu d'une couche de dureté obtenue par anodisation, la couche de dureté obtenue par anodisation étant évidée dans les régions se trouvant dans la direction de l'axe.

## Claims

1. A process of shaping the edge of a combustion chamber recess in the piston head of a finish-machined light-alloy piston, characterized in that the piston is moved past the oscillating charge carrier beam at an angle of inclination of 40 to 50 degrees, preferably 45 degrees, the charge carrier beam is caused to act on that portion of the rim of the combustion chamber recess which is to be refined by being remelted, and the charge carrier rays is moved over said portion only once.

2. A process according to claim 1, characterized in that the remelting speed is 20 to 50 mm/second, preferably 25 to 35 mm/second, and the frequency amounts to 500 to 900 Hz, preferably 750 Hz.

3. A process according to claims 1 and 2, characterized in that the depth of penetration of the charge carrier beams is 1 to 3 mm.

4. The use of the process with a light-alloy piston for diesel engines, which piston has a combustion chamber recess in a piston head covered by a hard anodized layer except in those portions of the combustion chamber recess which register with the piston pins.

1/2

Fig. 2

Fig. 2